# FASCICULE DE BREVET EUROPEEN

(11) **EP 4 112 477 B1**
(45) Date de publication et mention de la délivrance du brevet: **01.05.2024**
(21) Numéro de dépôt: 22179533.9
(22) Date de dépôt: 17.06.2022
(51) Int. Cl.: B64D 27/26

(54) **ENSEMBLE PROPULSEUR D'AÉRONEF COMPRENANT UNE ATTACHE MOTEUR AVANT COMPORTANT UNE POUTRE TRANSVERSALE PARTIELLEMENT POSITIONNÉE FACE À UN RENFORT TRANSVERSAL AVANT D'UNE STRUCTURE PRIMAIRE D'UN MÂT**
FLUGZEUG-PROPELLERBAUGRUPPE, DIE EINE VORDERE MOTORBEFESTIGUNG UMFASST, DIE EINEN QUERTRÄGER UMFASST, DER TEILWEISE MIT EINER VORDEREN QUERVERSTÄRKUNG EINER PRIMÄRSTRUKTUR EINES MASTS POSITIONIERT IST
AIRCRAFT PROPELLER ASSEMBLY COMPRISING A FRONT ENGINE ATTACHMENT COMPRISING A TRANSVERSE BEAM PARTIALLY POSITIONED FACED WITH A FRONT TRANSVERSE REINFORCEMENT OF A PRIMARY STRUCTURE OF A MAST

(30) Priorité: 29.06.2021 FR 2106985
(43) Date de publication de la demande: 04.01.2023
(73) Titulaire: Airbus Operations SAS, 31060 Toulouse (FR)
(72) Inventeur: GELIOT, Jean, 31060 TOULOUSE (FR)
(74) Mandataire: Fantin, Laurent

(56) Documents cités:
- FR-A1- 2 916 424
- FR-A1- 3 100 226

## Description

La présente demande se rapporte à un ensemble propulseur d'aéronef comprenant une attache moteur avant comportant une poutre transversale partiellement positionnée face à un renfort transversal avant d'une structure primaire d'un mât.

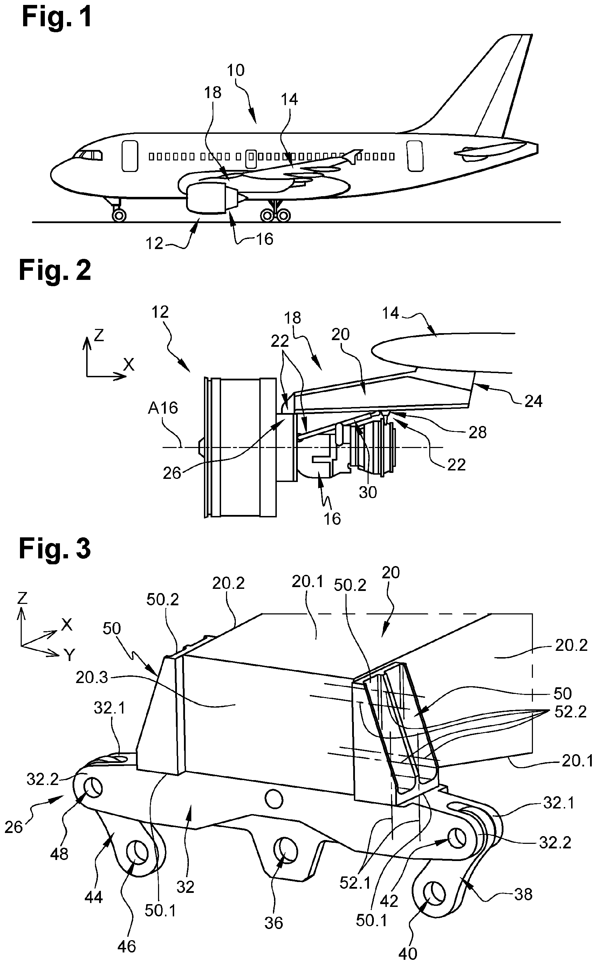

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 ainsi qu'un mât 18 reliant le moteur 16 et l'aile 14. Le mât 18 comprend une structure primaire 20 qui est reliée au moteur 16 par une attache moteur 22 et à l'aile 14 par une attache voilure 24.

Pour la présente invention, une direction longitudinale X est parallèle à l'axe de rotation A16 du moteur 16, une direction transversale horizontale Y est horizontale et perpendiculaire à l'axe de rotation A16 du moteur 16, une direction transversale verticale Z est verticale et perpendiculaire à l'axe de rotation A16 du moteur 16. Un plan transversal est perpendiculaire à la direction longitudinale X. Un plan longitudinal médian est un plan vertical passant par l'axe de rotation A16 du moteur 16. Les notions avant et arrière font référence au sens d'écoulement des gaz, l'avant correspondant à l'admission des gaz (air) dans le moteur et l'arrière correspondant à l'échappement des gaz (gaz de combustion).

L'attache moteur 22 comprend une attache moteur avant 26, une attache moteur arrière 28 et un couple de bielles de poussée 30 assurant la reprise des efforts de poussée.

Il est connu du document FR-3.100.226 une attache moteur arrière à faible encombrement transversal, et du document FR-2.916.424 un mât d'accrochage de moteur pour aéronef comprenant une cale biaise pour la fixation d'une attache moteur avant.

Selon une configuration visible sur la figure 3, la structure primaire 20 comprend des longerons supérieur et inférieur 20.1, des panneaux latéraux droit et gauche 20.2 ainsi qu'une pluralité de renforts transversaux reliant les longerons supérieur et inférieur 20.1 de même que les panneaux latéraux droit et gauche 20.2. Un renfort transversal avant 20.3 est positionné à l'avant de la structure primaire 20.

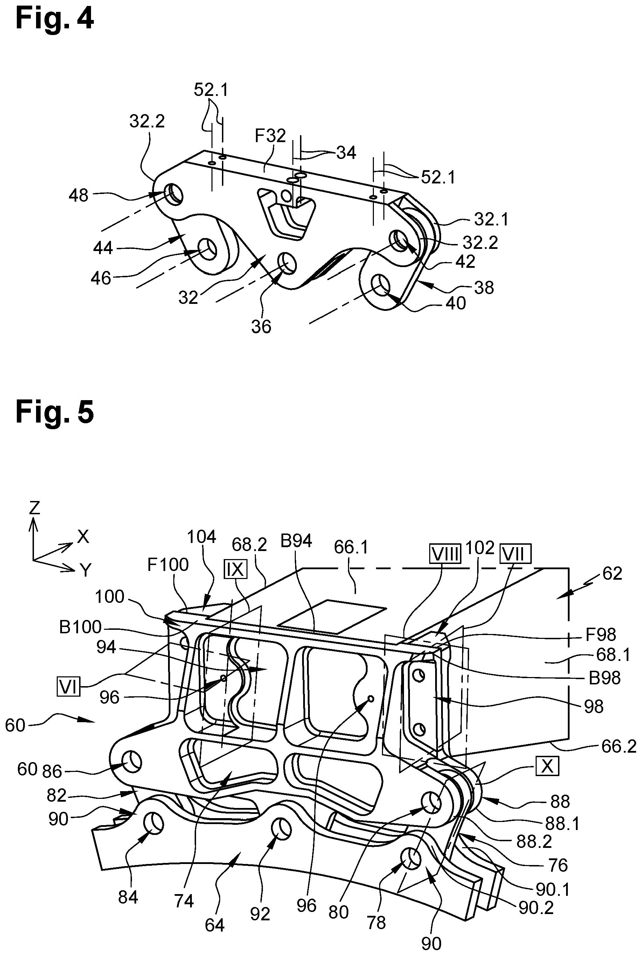

Selon un mode de réalisation visible sur les figures 3 et 4, l'attache moteur avant 26 comprend :
- une poutre transversale 32 positionnée sous la structure primaire 20, à l'aplomb du renfort transversal avant 20.3, et reliée à la structure primaire 20 par des éléments de liaison 34 verticaux et au moteur 16 par un axe de liaison de sécurité 36,
- une première bielle 38 reliée au moteur 16 par un premier axe de liaison moteur 40 et à la poutre transversale 32 par un premier axe de liaison poutre 42,
- une deuxième bielle 44 reliée au moteur 16 par un deuxième axe de liaison moteur 46 et à la poutre transversale 32 par un deuxième axe de liaison poutre 48.

Pour chaque axe de liaison poutre 42, 48, la poutre transversale 32 comprend une chape présentant deux ailes 32.1, 32.2, visible sur la figure 4, entre lesquelles est positionnée la première ou deuxième bielle 38, 44.

Selon une configuration, les première et deuxième bielles 38, 44 sont orientées de manière à converger vers un point positionné sous la poutre transversale 32.

Selon ce mode de réalisation, la poutre transversale 32 comprend une face supérieure F32 plaquée contre le longeron inférieur 20.1 de la structure primaire 20 ou contre une cale elle-même plaquée contre le longeron inférieur 20.1 de la structure primaire 20.

Pour améliorer la reprise des efforts comme illustré sur la figure 3, l'attache moteur avant 26 comprend deux équerres 50, positionnées de part et d'autre de la structure primaire 20, présentant chacune une première aile 50.1, approximativement horizontale, plaquée contre la face supérieure F32 de la poutre transversale 32 et reliée à cette dernière par des éléments de liaison 52.1 verticaux ainsi qu'une deuxième aile 50.2 plaquée contre l'un des panneaux latéraux droit et gauche 20.2 de la structure primaire 20 et reliée à ce dernier par des éléments de liaison 52.2.

Selon ce mode de réalisation, la totalité de la poutre transversale 32 est décalée vers le bas par rapport à la structure primaire 20 du mât, ce qui induit un encombrement relativement important selon la direction transversale verticale Z.

La présente invention vise à remédier à tout ou partie des inconvénients de l'art antérieur. A cet effet, l'invention a pour objet un ensemble propulseur d'aéronef, comprenant un moteur, une structure primaire d'un mât ainsi qu'une attache moteur avant reliant la structure primaire et le moteur ; la structure primaire comportant des longerons supérieur et inférieur, des panneaux latéraux droit et gauche ainsi qu'un renfort transversal avant, les longerons supérieur et inférieur ainsi que les panneaux latéraux droit et gauche comportant des bords transversaux avant ; l'attache moteur avant comportant :
- une poutre transversale reliée à la structure primaire,
- une première bielle reliée au moteur par au moins un premier axe de liaison moteur et à la poutre transversale par au moins un premier axe de liaison poutre,
- une deuxième bielle reliée au moteur par au moins un deuxième axe de liaison moteur et à la poutre transversale par au moins un deuxième axe de liaison poutre, les première et deuxième bielles convergeant en direction d'un point positionné en dessous de la poutre transversale,
- des équerres droite et gauche positionnées de part et d'autre de la structure primaire, présentant chacune une première aile reliée à la poutre transversale et une deuxième aile reliée à la structure primaire.

Selon l'invention, la poutre transversale comprend une extension supérieure au moins partiellement positionnée face au renfort transversal avant, au moins un premier élément de liaison reliant l'extension supérieure et le renfort transversal avant, des extensions latérales droite et gauche positionnées approximativement dans un plan transversal de part et d'autre de l'extension supérieure ainsi que, pour chaque extension latérale droite ou gauche, au moins un deuxième élément de liaison reliant l'extension latérale droite ou gauche et la première aile de l'équerre droite ou gauche positionnée approximativement dans un plan transversal.

Le fait que la poutre transversale soit partiellement positionnée face au renfort transversal avant de la structure primaire permet de réduire l'encombrement de l'attache moteur avant selon la direction transversale verticale.

Selon une autre caractéristique, l'attache moteur avant comprend plusieurs premiers éléments de liaison positionnés de manière symétrique par rapport à un plan longitudinal médian.

Selon une autre caractéristique, chaque premier élément de liaison comprend une tige présentant un axe approximativement horizontal.

Selon une autre caractéristique, l'extension supérieure présente un bord supérieur positionné approximativement au même niveau que le bord transversal avant du longeron supérieur de la structure primaire.

Selon une autre caractéristique, l'extension supérieure et les extensions latérales droite et gauche présentent des bords supérieurs alignés.

Selon une autre caractéristique, l'extension supérieure et les extensions latérales droite et gauche présentent des faces d'appui coplanaires.

Selon une autre caractéristique, la première aile de chaque équerre droite ou gauche présente une hauteur sensiblement égale à celle de l'extension latérale droite ou gauche à laquelle elle est reliée. En complément, l'attache moteur avant comprend plusieurs deuxièmes éléments de liaison répartis sur la hauteur de la première aile de chaque équerre droite ou gauche. Selon une autre caractéristique, la deuxième aile de chaque équerre droite ou gauche présente une hauteur sensiblement égale à celle d'un tronçon de la structure primaire au niveau duquel est positionnée l'équerre droite ou gauche. En complément, l'attache moteur avant comprend plusieurs troisièmes éléments de liaison répartis sur la hauteur de la deuxième aile de chaque équerre droite ou gauche.

L'invention a également pour objet un aéronef comprenant au moins un ensemble propulseur selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble propulseur sans nacelle,
- La figure 3 est une vue en perspective d'une attache moteur avant illustrant un mode de réalisation de l'art antérieur,
- La figure 4 est une vue en perspective d'une poutre transversale de l'attache moteur avant visible sur la figure 3,
- La figure 5 est une vue en perspective d'une attache moteur avant illustrant un mode de réalisation de l'invention,
- La figure 6 est une coupe selon le plan VI de l'attache moteur avant visible sur la figure 5,
- La figure 7 est une coupe selon le plan VII de l'attache moteur avant visible sur la figure 5,
- La figure 8 est une coupe selon le plan VIII de l'attache moteur avant visible sur la figure 5,
- La figure 9 est une coupe selon le plan IX de l'attache moteur avant visible sur la figure 5, et
- La figure 10 est une coupe selon le plan X de l'attache moteur avant visible sur la figure 5.

Sur les figures 5 à 10, on a représenté une attache moteur avant 60 d'un ensemble propulseur reliant une structure primaire 62 d'un mât d'aéronef et un moteur 64. Sur ces différentes figures, seule une partie du carter du moteur 64 et la partie avant de la structure primaire 62 sont représentées. Au moins un ensemble propulseur d'un aéronef est équipé d'une telle attache moteur avant 60.

Selon un mode de réalisation visible sur la figure 5, la structure primaire 62 comprend des longerons supérieur et inférieur 66.1, 66.2 ainsi que des panneaux latéraux droit et gauche 68.1, 68.2. Ces longerons supérieur et inférieur 66.1, 66.2 ainsi que ces panneaux latéraux droit et gauche 68.1, 68.2 comprennent des bords transversaux avant 70, positionnés dans un plan transversal, délimitant une ouverture à l'avant de la structure primaire 62.

Pour obtenir une structure en caisson fermée, la structure primaire 62 comprend un renfort transversal avant 72 reliant les longerons supérieur et inférieur 66.1, 66.2 ainsi que les panneaux latéraux droit et gauche 68.1, 68.2. Ce renfort transversal avant 72 présente une face avant F72 orientée vers l'avant et une face arrière F72' orientée vers l'arrière.

Selon une première configuration, la face avant F72 du renfort transversal avant 72 est positionnée approximativement dans le même plan transversal que les bords transversaux avant 70 des longerons supérieur et inférieur 66.1, 66.2 ainsi que des panneaux latéraux droit et gauche 68.1, 68.2.

Selon une deuxième configuration, la face avant F72 du renfort transversal avant 72 est décalée vers l'avant par rapport au plan transversal des bords transversaux avant 70 des longerons supérieur et inférieur 66.1, 66.2 ainsi que des panneaux latéraux droit et gauche 68.1, 68.2. Selon cette deuxième configuration, le renfort transversal 72 peut comprendre un rebord plaqué contre les bords transversaux avant 70.

L'attache moteur avant 60 comprend également :
- une poutre transversale 74 reliée à la structure primaire 62,
- une première bielle 76 reliée au moteur 64 par au moins un premier axe de liaison moteur 78 et à la poutre transversale 74 par au moins un premier axe de liaison poutre 80,
- une deuxième bielle 82 reliée au moteur 64 par au moins un deuxième axe de liaison moteur 84 et à la poutre transversale 74 par au moins un deuxième axe de liaison poutre 86.

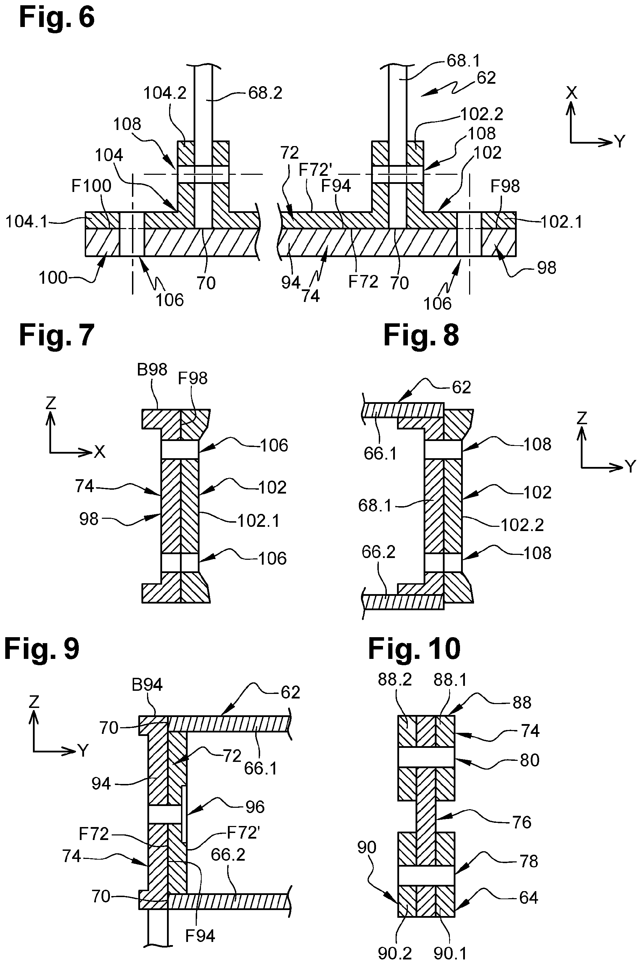

Comme illustré sur la figure 10, pour chaque axe de liaison poutre 80, 86, la poutre transversale 74 comprend une chape 88 présentant deux ailes 88.1, 88.2 entre lesquelles est positionnée la première ou deuxième bielle 76, 82.

Pour chaque axe de liaison moteur 78, 84, le moteur 64 comprend une chape 90 présentant deux ailes 90.1, 90.2 entre lesquelles est positionnée la première ou deuxième bielle 76, 82. Selon un mode de réalisation, au moins un axe de liaison moteur 78, 84 et/ou au moins un axe de liaison poutre 80, 86 comprend une liaison rotule.

Selon un agencement, les chapes 88 et 90 de la poutre transversale 74 et du moteur 64 sont positionnées de manière à ce que les première et deuxième bielles 76, 82 soient convergentes en direction d'un point, positionné en dessous de la poutre transversale 74, proche de l'axe de rotation du moteur 64. Autrement dit, la ligne reliant les deux centres de la première bielle 76 (les centres de la première bielle 76 étant traversés respectivement par l'axe de liaison poutre 80 et l'axe de liaison moteur 78) croise la ligne reliant les deux centres de la deuxième bielle 82 (les centres de la deuxième bielle 82 étant traversés respectivement par l'axe de liaison poutre 86 et l'axe de liaison moteur 84) en un point positionné en dessous de la poutre transversale 74, proche de l'axe de rotation du moteur 64.

Selon une configuration, l'attache moteur avant 60 comprend un axe de liaison de sécurité 92 reliant directement la poutre transversale 74 et le moteur 64.

Cet axe de liaison de sécurité 92, les axes de liaison moteur ou poutre 78, 80, 84, 86, les première et deuxième bielles 76, 82 ainsi que les différentes chapes 88, 90 ne sont pas plus décrits car ils peuvent être identiques à ceux de l'art antérieur.

Selon une caractéristique de l'invention, la poutre transversale 74 comprend une extension supérieure 94 au moins partiellement positionnée face au renfort transversal avant 72 et reliée à ce dernier par au moins un premier élément de liaison 96. Chaque premier élément de liaison 96 comprend une tige ayant un axe approximativement horizontal, parallèle à la direction longitudinale X. L'extension supérieure 94 se présente sous la forme d'une plaque positionnée approximativement dans un plan transversal.

Le fait que la poutre transversale 74 soit partiellement positionnée face au renfort transversal avant 72 de la structure primaire 62 permet de réduire l'encombrement de l'attache moteur avant selon la direction transversale verticale Z.

Selon un mode de réalisation, l'extension supérieure 94 présente un bord supérieur B94 positionné approximativement au même niveau que le bord transversal avant 70 du longeron supérieur 66.1 de la structure primaire 62.

Par partiellement positionnée face au renfort transversal avant 72, on entend que le bord supérieur B94 est positionné au-dessus du bord transversal avant 70 du longeron inférieur 66.2 de la structure primaire 62.

Par approximativement horizontal, on entend que chaque premier élément de liaison présente un axe formant avec une direction horizontale un angle de +/-10°.

Par approximativement au même niveau, on entend que le bord supérieur B94 est positionné à la même hauteur que le bord transversal avant 70 du longeron supérieur 66.1 de la structure primaire 62 à +/- 2 cm.

Selon une première configuration, l'extension supérieure 94 de la poutre transversale 74 présente une face d'appui F94 plaquée contre le renfort transversal avant 72 et/ou les bords transversaux avants 70 des longerons supérieur et inférieur 66.1, 66.2 ainsi que des panneaux latéraux droit et gauche 68.1, 68.2.

Selon une deuxième configuration, l'attache moteur avant 60 comprend une cale intercalaire positionnée entre la face d'appui F94 de l'extension supérieure 94 de la poutre transversale 74 et le renfort transversal avant 72 et/ou les bords transversaux avant 70 des longerons supérieur et inférieur 66.1, 66.2 ainsi que des panneaux latéraux droit et gauche 68.1, 68.2. Selon un agencement, l'attache moteur avant 60 comprend plusieurs premiers éléments de liaison 96 positionnés de manière symétrique par rapport au plan longitudinal médian. Selon un mode de réalisation, la poutre transversale 74 comprend des extensions latérales droite et gauche 98, 100 positionnées de part et d'autre de l'extension supérieure 94. Chaque extension latérale droite ou gauche 98, 100 se présente sous la forme d'une plaque positionnée approximativement dans un plan transversal.

Ces extensions latérales droite et gauche présentent des faces d'appui F98, F100 coplanaires à la face d'appui F94 de l'extension supérieure 94, positionnées approximativement dans un plan transversal. Selon un mode de réalisation, les extensions latérales droite et gauche 98, 100 présentent des bords supérieurs B98, B100 alignés avec le bord supérieur B94 de l'extension supérieure 94.

En complément, l'attache moteur avant 60 comprend des équerres droite et gauche 102, 104 positionnées de part et d'autre de la structure primaire 62, l'équerre droite 102 présentant une première aile 102.1 reliée à l'extension latérale droite 98 et une deuxième aile 102.2 reliée à la structure primaire 62, l'équerre gauche 104 présentant une première aile 104.1 reliée à l'extension latérale gauche 100 et une deuxième aile 104.2 reliée à la structure primaire 62. Selon une configuration, la première aile 102.1, 104.1 de chaque équerre droite ou gauche 102, 104 présente une surface d'appui plaquée contre la face d'appui F98, F100 de l'extension latérale droite ou gauche 98, 100. Contrairement à l'art antérieur, la première aile 102.1, 104.1 de chaque équerre droite ou gauche 102, 104 n'est pas positionnée dans un plan horizontal mais sensiblement vertical, approximativement parallèle à un plan transversal.

La première aile 102.1, 104.1 de chaque équerre droite ou gauche 102, 104 est reliée à l'extension latérale droite ou gauche 98, 100 par collage, par soudage ou par au moins un deuxième élément de liaison 106 traversant la première aile 102.1, 104.1 et l'extension latérale droite ou gauche 98, 100, comme illustré sur la figure 7. Chaque deuxième élément de liaison 106 présente une tige ayant un axe approximativement horizontal.

Bien entendu, l'invention n'est pas limitée à ces modes de réalisation pour la liaison entre la première aile 102.1, 104.1 et l'extension latérale droite ou gauche 98, 100.

Selon un mode de réalisation, la première aile 102.1, 104.1 de chaque équerre droite ou gauche 102, 104 présente une hauteur (dimension prise selon la direction transversale verticale Z) sensiblement égale à celle de l'extension latérale droite ou gauche 98, 100. La liaison entre la première aile 102.1, 104.1 de chaque équerre droite ou gauche 102, 104 et l'extension latérale droite ou gauche 98, 100 comprend plusieurs deuxièmes éléments de liaison 106 répartis sur la hauteur de la première aile 102.1, 104.1 de chaque équerre droite ou gauche 102, 104.

Selon une configuration, la deuxième aile 102.2, 104.2 de chaque équerre droite ou gauche 102, 104 présente une surface d'appui plaquée contre le panneau latéral droit ou gauche 68.1, 68.2 de la structure primaire 62. La deuxième aile 102.2, 104.2 de chaque équerre droite ou gauche 102, 104 est reliée à la structure primaire 62 par collage, par soudage ou par au moins un troisième élément de liaison 108 traversant la deuxième aile 102.2, 104.2 et le panneau latéral droit ou gauche 68.1, 68.2 de la structure primaire 62, comme illustré sur la figure 8. Chaque troisième élément de liaison 108 présente une tige ayant un axe approximativement horizontal.

Bien entendu, l'invention n'est pas limitée à ces modes de réalisation pour la liaison entre la deuxième aile 102.2, 104.2 de chaque équerre droite ou gauche 102, 104 et la structure primaire 62.

Selon un mode de réalisation, la deuxième aile 102.2, 104.2 de chaque équerre droite ou gauche 102, 104 présente une hauteur (dimension prise selon la direction transversale verticale Z) sensiblement égale à celle du tronçon de la structure primaire 62 au niveau duquel est positionnée l'équerre droite ou gauche 102, 104. La liaison entre la deuxième aile 102.2, 104.2 de chaque équerre droite ou gauche 102, 104 et la structure primaire 62 comprend plusieurs troisièmes éléments de liaison 108 répartis sur la hauteur de la deuxième aile 102.2, 104.2 de chaque équerre droite ou gauche 102, 104.

Selon un mode opératoire, préalablement au montage du moteur 64, la poutre transversale 74 ainsi que les équerres droite et gauche 102, 104 sont reliées à la structure primaire 62 grâce aux premiers, deuxièmes et troisièmes éléments de liaison 96, 106 et 108.

Les première et deuxième bielles 76, 82 sont reliées au moteur 64 ou à la poutre transversale 74 puis le moteur 64 est relié au mât de l'aéronef grâce aux premier et deuxième axes de liaison moteur ou poutre 78, 80, 84, 86.

## Revendications

1. Ensemble propulseur d'aéronef, comprenant un moteur (64), une structure primaire (62) d'un mât ainsi qu'une attache moteur avant (60) reliant la structure primaire (62) et le moteur (64) ; la structure primaire (62) comportant des longerons supérieur et inférieur (66.1, 66.2), des panneaux latéraux droit et gauche (68.1, 68.2) ainsi qu'un renfort transversal avant (72), les longerons supérieur et inférieur (66.1, 66.2) ainsi que les panneaux latéraux droit et gauche (68.1, 68.2) comportant des bords transversaux avant (70) ; l'attache moteur avant (60) comportant :
- une poutre transversale (74) reliée à la structure primaire (62),
- une première bielle (76) reliée au moteur (64) par au moins un premier axe de liaison moteur (78) et à la poutre transversale (74) par au moins un premier axe de liaison poutre (80),
- une deuxième bielle (82) reliée au moteur (64) par au moins un deuxième axe de liaison moteur (84) et à la poutre transversale (74) par au moins un deuxième axe de liaison poutre (86), les première et deuxième bielles (76, 82) convergeant en direction d'un point positionné en dessous de la poutre transversale (74),
- des équerres droite et gauche (102, 104) positionnées de part et d'autre de la structure primaire (62), présentant chacune une première aile (102.1, 104.1) reliée à la poutre transversale (74) et une deuxième aile (102.2, 104.2) reliée à la structure primaire (62), où la poutre transversale (74) comprend une extension supérieure (94) au moins partiellement positionnée face au renfort transversal avant (72), au moins un premier élément de liaison (96) reliant l'extension supérieure (94) et le renfort transversal avant (72), des extensions latérales droite et gauche (98, 100) positionnées approximativement dans un plan transversal de part et d'autre de l'extension supérieure (94) ainsi que, pour chaque extension latérale droite ou gauche (98, 100), au moins un deuxième élément de liaison (106) reliant l'extension latérale droite ou gauche (98, 100) et la première aile (102.1, 104.1) de l'équerre droite ou gauche (98, 100) positionnée approximativement dans un plan transversal.

2. Ensemble propulseur d'aéronef selon la revendication précédente, **caractérisé en ce que** l'attache moteur avant (60) comprend plusieurs premiers éléments de liaison (96) positionnés de manière symétrique par rapport à un plan longitudinal médian.

3. Ensemble propulseur d'aéronef selon l'une des revendications précédentes, **caractérisé en ce que** chaque premier élément de liaison (96) comprend une tige présentant un axe approximativement horizontal.

4. Ensemble propulseur d'aéronef selon l'une des revendications précédentes, **caractérisé en ce que** l'extension supérieure (94) présente un bord supérieur (B94) positionné approximativement au même niveau que le bord transversal avant (70) du longeron supérieur (66.1) de la structure primaire (62).

5. Ensemble propulseur d'aéronef selon l'une des revendications précédentes, **caractérisé en ce que** l'extension supérieure (94) et les extensions latérales droite et gauche (98, 100) présentent des bords supérieurs (B94, B98, B100) alignés.

6. Ensemble propulseur d'aéronef selon l'une des revendications précédentes, **caractérisé en ce que** l'extension supérieure (94) et les extensions latérales droite et gauche (98, 100) présentent des faces d'appui (F94, F98, F100) coplanaires.

7. Ensemble propulseur d'aéronef selon l'une des revendications précédentes, **caractérisé en ce que** la première aile (102.1, 104.1) de chaque équerre droite ou gauche (102, 104) présente une hauteur sensiblement égale à celle de l'extension latérale droite ou gauche (98, 100) à laquelle elle est reliée et **en ce que** l'attache moteur avant (60) comprend plusieurs deuxièmes éléments de liaison (106) répartis sur la hauteur de la première aile (102.1, 104.1) de chaque équerre droite ou gauche (102, 104).

8. Ensemble propulseur d'aéronef selon l'une des revendications précédentes, **caractérisé en ce que** la deuxième aile (102.2, 104.2) de chaque équerre droite ou gauche (102, 104) présente une hauteur sensiblement égale à celle d'un tronçon de la structure primaire (62) au niveau duquel est positionnée l'équerre droite ou gauche (102, 104) et **en ce que** l'attache moteur avant (60) comprend plusieurs troisièmes éléments de liaison (108) répartis sur la hauteur de la deuxième aile (102.2, 104.2) de chaque équerre droite ou gauche (102, 104).

9. Aéronef comprenant au moins un ensemble propulseur selon l'une des revendications précédentes.

## Patentansprüche

1. Triebwerkseinheit eines Flugzeugs mit einem Motor (64), einer Primärstruktur (62) eines Mastes sowie mit einer vordere Motorbefestigung (60), welche die Primärstruktur (62) und den Motor (64) verbindet; wobei die Primärstruktur (62) einen oberen und einen unteren Längsträger (66.1, 66.2), rechte und linke Seitenwände (68.1, 68.2) sowie eine vordere Querverstärkung (72) aufweist, wobei der obere und untere Längsträger (66.1, 66.2) sowie die rechte und linke Seitenwand (68.1, 68.2) vordere Querkanten (70) aufweisen; wobei die vordere Motorbefestigung (60) aufweist:
- einen Querträger (74), der mit der Primärstruktur (62) verbunden ist,
- eine erste Verbindungsstange (76), die mit dem Motor (64) über wenigstens eine erste Motorverbindungsachse (78) und mit dem Querträger (74) über wenigstens eine erste Trägerverbindungsachse (80) verbunden ist,
- eine zweite Verbindungsstange (82), die mit dem Motor (64) über wenigstens eine zweite Motorverbindungsachse (84) und mit dem Querträger (74) über wenigstens eine zweite Trägerverbindungsachse (86) verbunden ist, wobei die erste und die zweite Verbindungsstange (76, 82) in Richtung eines sich unterhalb des Querträgers (74) befindenden Punktes konvergieren,
- rechte und linke Winkel (102, 104), die auf beiden Seiten der Primärstruktur (62) angeordnet sind und jeweils einen ersten Schenkel (102.1, 104.1) aufweisen, der mit dem Querträger (74) verbunden ist, und einen zweiten Schenkel (102.2, 104.2), der mit der Primärstruktur (62) verbunden ist,
wobei der Querträger (74) eine obere Verlängerung (94), die zumindest teilweise gegenüber der vorderen Querverstärkung (72) angeordnet ist, und wenigstens ein erstes Verbindungselement (96) aufweist, das die obere Verlängerung (94) und die vordere Querverstärkung (72) verbindet, eine rechte und eine linke seitliche Verlängerung (98, 100), die ungefähr in einer Querebene auf beiden Seiten der oberen Verlängerung (94) angeordnet sind, sowie für jede rechte oder linke seitliche Verlängerung (98, 100) wenigstens ein zweites Verbindungselement (106) aufweist, das die rechte oder linke seitliche Verlängerung (98, 100) und den ersten Schenkel (102.1, 104.1) des rechten oder linken Winkels (98, 100), der ungefähr in einer Querebene angeordnet ist, verbindet.

2. Triebwerkseinheit eines Flugzeugs nach dem vorhergehenden Anspruch, **dadurch gekennzeichnet, dass** die vordere Motorbefestigung (60) mehrere erste Verbindungselemente (96) umfasst, die symmetrisch zu einer Längsmittelebene angeordnet sind.

3. Triebwerkseinheit eines Flugzeugs nach einem der vorhergehenden Ansprüche, **dadurch gekennzeichnet, dass** das erste Verbindungselement (96) jeweils eine Stange mit einer annähernd horizontalen Achse umfasst.

4. Triebwerkseinheit eines Flugzeugs nach einem der vorhergehenden Ansprüche, **dadurch gekennzeichnet, dass** die obere Verlängerung (94) eine Oberkante (B94) aufweist, die ungefähr auf gleicher Höhe mit der vorderen Querkante (70) des oberen Längsträgers (66.1) der Primärstruktur (62) angeordnet ist.

5. Triebwerkseinheit eines Flugzeugs nach einem der vorhergehenden Ansprüche, **dadurch gekennzeichnet, dass** die obere Verlängerung (94) und die rechte und linke Seitenverlängerung (98, 100) fluchtende Oberkanten (B94, B98, B100) aufweisen.

6. Triebwerkseinheit eines Flugzeugs nach einem der vorhergehenden Ansprüche, **dadurch gekennzeichnet, dass** die obere Verlängerung (94) und die rechte und linke seitliche Verlängerung (98, 100) komplanare Auflageflächen (F94, F98, F100) aufweisen.

7. Triebwerkseinheit eines Flugzeugs nach einem der vorhergehenden Ansprüche, **dadurch gekennzeichnet, dass** der erste Schenkel (102.1, 104.1) des rechten oder linken Winkels (102, 104) jeweils eine Höhe aufweist, die im Wesentlichen gleich derjenigen der rechten oder linken seitlichen Verlängerung (98, 100) ist, mit der er verbunden ist, und dass die vordere Motorbefestigung (60) mehrere zweite Verbindungselemente (106) umfasst, die jeweils über die Höhe des ersten Schenkels (102.1, 104.1) des rechten oder linken Winkels (102, 104) verteilt sind.

8. Triebwerkseinheit eines Flugzeugs nach einem der vorhergehenden Ansprüche, **dadurch gekennzeichnet, dass** der zweite Schenkel (102.2, 104.2) des rechten oder linken Winkels (102, 104) jeweils eine Höhe aufweist, die im Wesentlichen gleich der Höhe eines Abschnitts der Primärstruktur (62) ist, auf dessen Bereich der rechte oder linke Winkel (102, 104) angeordnet ist, und dass die vordere Motorbefestigung (60) mehrere dritte Verbindungselemente (108) umfasst, die jeweils über die Höhe des zweiten Schenkels (102.2, 104.2) des rechten oder linken Winkels (102, 104) verteilt sind.

9. Luftfahrzeug mit wenigstens einer Triebwerkseinheit nach einem der vorhergehenden Ansprüche.

## Claims

1. Aircraft propulsion assembly, comprising an engine (64), a primary structure (62) of a strut and a front engine mount (60) which connects the primary structure (62) and the engine (64); the primary structure (62) comprising upper and lower side members (66.1, 66.2), right and left lateral panels (68.1, 68.2) and a front transverse reinforcement (72), the upper and lower side members (66.1, 66.2) and the right and left lateral panels (68.1, 68.2) comprising front transverse edges (70); the front engine mount (60) comprising:
- a transverse beam (74) which is connected to the primary structure (62),
- a first connection rod (76) which is connected to the engine (64) by means of at least one first engine connection axle (78) and to the transverse beam (74) by means of at least one first beam connection axle (80),
- a second connection rod (82) which is connected to the engine (64) by means of at least one second engine connection axle (84) and to the transverse beam (74) by means of at least one second beam connection axle (86), the first and second connection rods (76, 82) converging in the direction of a location which is positioned below the transverse beam (74),
- right and left brackets (102, 104) which are positioned at one side and the other of the primary structure (62) and which each have a first wing (102.1, 104.1) which is connected to the transverse beam (74) and a second wing (102.2, 104.2) which is connected to the primary structure (62),
wherein the transverse beam (74) comprises an upper extension (94) which is at least partially positioned opposite the front transverse reinforcement (72), at least one first connection element (96) which connects the upper extension (94) and the front transverse reinforcement (72), right and left lateral extensions (98, 100) which are positioned approximately in a transverse plane at one side and the other of the upper extension (94) and, for each right or left lateral extension (98, 100), at least one second connection element (106) which connects the right or left lateral extension (98, 100) and the first wing (102.1, 104.1) of the right or left bracket (98, 100) which is positioned approximately in a transverse plane.

2. Aircraft propulsion assembly as claimed in the preceding claim, wherein the front engine mount (60) comprises a plurality of first connection elements (96) which are positioned in a symmetrical manner with respect to a longitudinal center plane.

3. Aircraft propulsion assembly as claimed in one of the preceding claims, wherein each first connection element (96) comprises a rod which has an approximately horizontal axis.

4. Aircraft propulsion assembly as claimed in one of the preceding claims, wherein the upper extension (94) has an upper edge (B94) which is positioned approximately at the same level as the front transverse edge (70) of the upper side member (66.1) of the primary structure (62).

5. Aircraft propulsion assembly as claimed in one of the preceding claims, wherein the upper extension (94) and the right and left lateral extensions (98, 100) have aligned upper edges (B94, B98, B100).

6. Aircraft propulsion assembly as claimed in one of the preceding claims, wherein the upper extension (94) and the right and left lateral extensions (98, 100) have coplanar abutment faces (F94, F98, F100).

7. Aircraft propulsion assembly as claimed in one of the preceding claims, wherein the first wing (102.1, 104.1) of each right or left bracket (102, 104) has a height which is substantially equal to that of the right or left lateral extension (98, 100) to which it is connected and wherein the front engine mount (60) comprises a plurality of second connection elements (106) which are distributed over the height of the first wing (102.1, 104.1) of each right or left bracket (102, 104).

8. Aircraft propulsion assembly as claimed in one of the preceding claims, wherein the second wing (102.2, 104.2) of each right or left bracket (102, 104) has a height which is substantially equal to that of a portion of the primary structure (62) in the region of which the right or left bracket (102, 104) is positioned, and wherein the front engine mount (60) comprises a plurality of third connection elements (108) which are distributed over the height of the second wing (102.2, 104.2) of each right or left bracket (102, 104).

9. Aircraft comprising at least one propulsion assembly as claimed in one of the preceding claims.
